# EUROPÄISCHE PATENTSCHRIFT

(11) **EP 2 808 219 B1**
(45) Veröffentlichungstag und Bekanntmachung des Hinweises auf die Patenterteilung: **29.07.2020**
(21) Anmeldenummer: 13005828.2
(22) Anmeldetag: 14.12.2013
(51) Int. Cl.: B60W 30/18, G07C 5/08, G08G 1/16, B60K 37/04, B62D 15/02, B60W 50/14, B60W 50/00

(54) **Fahrerassistenz-System, insbesondere für ein Nutzfahrzeug**
Driver assistance system, in particular for a utility vehicle
Systeme d'assistance à la conduite, en particulier pour un vehicule utilitaire

(30) Priorität: 31.05.2013 DE 102013009218
(43) Veröffentlichungstag der Anmeldung: 03.12.2014
(73) Patentinhaber: MAN Truck & Bus SE, 80995 München (DE)
(72) Erfinder: Mayer, Florian, 80689 München (DE); Schleufe, Stefan, 81245 München (DE); Soboll, Stefan, 85221 Dachau (DE)
(74) Vertreter: Liebl, Thomas

(56) Entgegenhaltungen:
- WO-A1-2006/092370
- DE-A1-102007 027 438
- DE-A1-102007 036 251
- DE-A1-102008 006 309
- DE-A1-102011 082 475
- GB-A- 2 493 430
- JP-A- S5 881 862
- JP-A- 2001 043 498
- JP-A- 2008 056 173
- JP-A- 2008 157 880
- US-A1- 2008 009 990

## Beschreibung

Die Erfindung betrifft ein Fahrerassistenz-System, insbesondere für ein Nutzfahrzeug nach dem Oberbegriff des Anspruchs 1.

In modernen Fahrzeugen, insbesondere in Nutzfahrzeugen, werden in allgemein bekannter Weise Fahrdaten zum Kurs einer aktuell gefahrenen Wegstrecke ermittelt. Solche Fahrdaten sind beispielsweise die Geschwindigkeit, Lenkwinkeleinschläge, GPS-Positionsdaten, Abstände zu Hindernissen und/anderen Fahrzeugen etc. Solche Fahrdaten werden in FahrerAssistenz-Systemen zu Informationen und/oder Warnungen und/oder Fahrempfehlungen für den Fahrer und gegebenenfalls auch für selbsttätige Fahreingriffe, zum Beispiel für Notbremsungen, ausgewertet.

Beispielsweise ist ein Fahrerassistenz-System zur Unterstützung eines Fahrers eines Kraftfahrzeugs beim Einparken in eine Parklücke bekannt (DE 10 2007 002 262 A1). Dabei werden mittels Sensoren parametermögliche Parklücken ermittelt und dem Fahrer mittels einer graphischen Bedieneinrichtung dargestellt. Die Bedieneinrichtung lässt mittels eines Bedienelements die Auswahl beziehungsweise Korrektur einer dargestellten Zielposition für das Fahrzeug zu. Weiter sind auch Einpark-Assistenzsysteme allgemein bekannt, bei denen der Einparkvorgang selbsttätig ohne Fahrereingriff erfolgen kann.

Nachfolgendes Problem lässt sich mit den vorstehenden Fahrerassistenz-Systemen nicht lösen:
An manchen engen und/oder dicht beparkten Straßen kann es sein, dass vor allem wenn sich größere Fahrzeuge, insbesondere Nutzfahrzeuge begegnen, eines davon rückwärtsfahren muss, um den Verkehrsfluss überhaupt wieder zu ermöglichen. Besonders kritische Situationen können in schwierigem Gelände zum Beispiel bei einem Holzzug auf einer Forststraße oder an engen Straßenstellen, zum Beispiel bei einem Bus im Siedlungsbereich, auftreten. Für den Fahrer eines großen Fahrzeugs ist es dabei schwierig und mit Stress verbunden, das Fahrzeug rückwärts zur möglichen nächsten Ausweichstelle zu bewegen.

Aus der US 2008/0009990 A1 ist ein gattungsgemäßes Fahrerassistenzsystem für ein Fahrzeug bekannt. Aus der GB 2 493 430 A ist eine Fahrunterstützungsvorrichtung für ein Kraftfahrzeug zur Unterstützung der Befahrung enger Fahrwege bekannt. Die Fahrunterstützungsvorrichtung weist eine Datenerfassungseinheit zur Erfassung der Daten einer zurückzulegenden Wegstrecke aus Rad- und Lenkwinkelsensoren auf. Zusätzlich weist die Fahrunterstützungsvorrichtung eine Trajektorien-Speichereinheit und eine Ansteuereinheit auf.

Aufgabe der Erfindung ist es, ein Fahrerassistenz-System vorzuschlagen, das den Fahrer bei der Bewältigung der vorstehenden Rangierprobleme unterstützt.

Diese Aufgabe wird gelöst durch die Merkmale der unabhängigen Patentansprüche. Vorteilhafte Weiterbildungen sind in den abhängigen Ansprüchen genannt.

Erfindungsgemäß ist vorgesehen, dass ermittelte Fahrdaten für den Kurs jeweils eines aktuell vorwärts gefahrenen, vorbestimmten letzten Streckenabschnitts in einem temporären Speicher gespeichert werden. Bei einer Aktivierung der Assistenzfunktion und einer Rückwärtsfahrt erhält der Fahrer durch Auswertung der im temporären Speicher gespeicherten Fahrdaten eine Orientierungshilfe mittels optischer und/oder akustischer und/oder haptischer Informationen und/oder durch selbsttätige Lenkeingriffe für eine Rückwärtsfahrt auf dem vorher vorwärts gefahrenen und aufgezeichneten Streckenabschnitt.

Bei einem erfindungsgemäßen Fahrerassistenz-System wird davon ausgegangen, dass es bei den vorstehend beschriebenen Begegnungsproblemen regelmäßig eine günstige Lösung ist, den vorher vorwärts gefahrenen Weg wieder genau bis zu einer möglichen Ausweichstelle rückwärts zu fahren. Rangierschwierigkeiten und gegebenenfalls stressbedingte Fahrfehler werden mit den dem Fahrer zur Verfügung gestellten Orientierungshilfen reduziert, sodass eine einfache Rückverfolgung des vorher vorwärts gefahrenen Wegs für den Fahrer möglich ist. Der situationsbedingte Stress für einen Fahrer reduziert sich erheblich und er kann sich vorteilhaft mehr auf Faktoren konzentrieren, welche gegebenenfalls mit Veränderungen in der Umgebung zu tun haben und weniger mit dem Bewegen des Fahrzeugs an sich.

Konkret können während der Fahrt im jeweils letzten Streckenabschnitt aktuelle Stellungssignale eines Lenkwinkelsensors zusammen mit Geschwindigkeitssignalen als Fahrdaten der "gelenkten Spur" im temporären Speicher aufgezeichnet werden.

In einer vorteilhaften Weiterbildung werden zudem Umgebungsinformationen, insbesondere mit Abstandssensoren und/oder mit Kameras, erfasst, ausgewertet und gespeichert, welche bei der Orientierungshilfe für den Fahrer für eine Überwachung und gegebenenfalls Korrektur des Rückwegs berücksichtigt werden. Dies soll insbesondere dann erfolgen, wenn im Vergleich zwischen den bei der Vorwärtsfahrt gespeicherten Umgebungsdaten und den aktuell bei der Rückwärtsfahrt erfassten Umgebungsdaten neue Gegebenheiten, insbesondere Hindernisse erkannt werden.

Das Fahrerassistenz-System wird zweckmäßig bei jeder festgestellter Vorwärtsfahrt zur Erfassung und temporären Aufzeichnung der Fahrdaten aktiviert. Die Bereitstellung der Orientierungshilfe für eine zurückverfolgte Rückwärtsfahrt kann bei eingelegtem Rückwärtsgang erfolgen. Als Orientierungshilfen sind beispielsweise akustische Warnsignale möglich, wenn der zurückverfolgte Streckenabschnitt verlassen wird. Entsprechend sind auch haptische Warnungen, beispielsweise durch eine Lenkradvibrierung, möglich. In einer besonders aufwendigen Ausführung ist grundsätzlich auch eine rechnergesteuerte, vollautomatische Rückfahrt auf der vorher in Vorwärtsfahrt gefahrenen Strecke mit entsprechenden automatischen Lenkeingriffen möglich.

Eine relativ kostengünstige, optische Orientierungshilfe kann den in vielen Fahrzeugen ohnehin enthaltenen Bildschirm beispielsweise eines GPS-Systems mitverwenden. Dabei ist auf dem Bildschirm eine gegebenenfalls schematische Draufsicht oder ein 3D-Bild der aktuellen Umgebung dargestellt. Als optische Orientierungshilfe wird eine darauf produzierte, aus dem vorangegangenen, vorwärts gefahrenen und gespeicherten Streckenabschnitt abgeleitete Rückfahrt-Trajektorie zur Verfügung gestellt. Der Fahrer kann sich nun einfach an diese Rückfahrt-Trajektorie als Rangiervorschlag orientieren.

Ergänzend können vorteilhaft in einer solchen Bilddarstellung gegebenenfalls auch aktuelle Hindernisse mit angezeigt werden, welche zum Beispiel bei der vorangegangenen Vorwärtsfahrt noch nicht vorhanden waren. Die Rückfahrt-Trajektorie kann dann über entsprechende Rechenoperationen für eine hindernisfreie Rückfahrt korrigiert werden.

Die Dimensionierung des Datenspeichers für die temporäre Speicherung der Fahrdaten ist entsprechend der Datenstrommenge aus den verwendeten Sensoren und entsprechend der Länge des jeweils vorgegebenen und betrachteten Streckenabschnitts durchzuführen.

Die Funktion des aufgezeigten Fahrerassistenz-Systems wird erfindungsgemäß bei entsprechender Integration auch bei einem Gespann aus Zugmaschine mit Anhänger oder Aufleger oder einem abknickenden Bus angewendet. Neben der Verwendung des Fahrerassistenz-Systems in Nutzfahrzeugen, wie Transportfahrzeugen, Bussen, Schneepflügen, Müllautos, etc. kann das System gegebenenfalls auch in Personenkraftwagen oder bei anderen Fahrsituationen, wo es auf eine gezielte Vorwärts- und Rückwärtsfahrt ankommt, angewendet werden.

Anhand einer Zeichnung wird die Erfindung weiter erläutert.

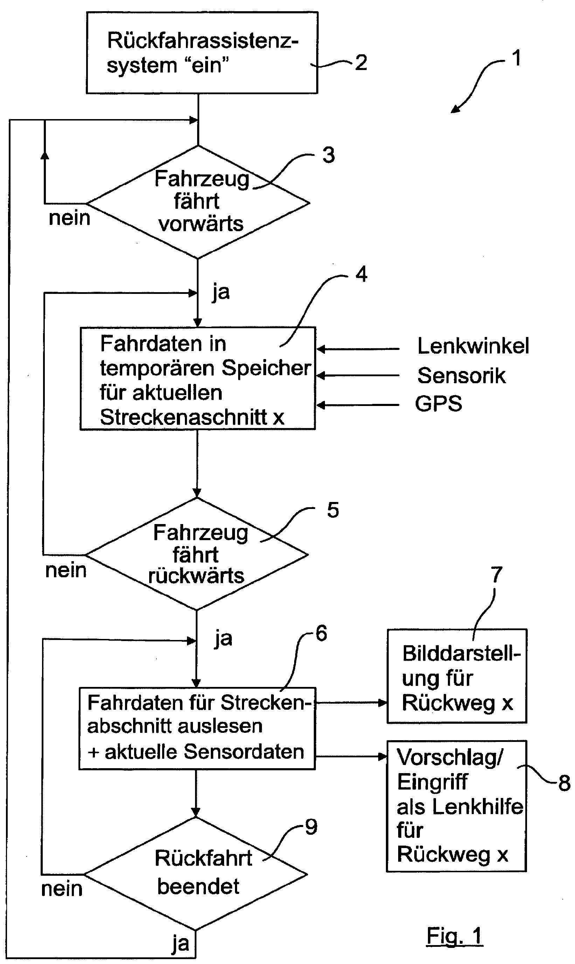

Die einzige Figur zeigt ein Flussdiagramm eines Ausführungsbeispiels der Erfindung:

Im Flussdiagramm 1 wird im ersten Block 2 festgestellt, dass das Fahrerassistenz-System als Rückfahr-Assistenzsystem eingeschaltet und aktiviert ist.

Nachfolgend wird an der Verzweigungsstelle 3 ermittelt, beispielsweise durch die Feststellung eines eingelegten Vorwärtsgangs, ob das Fahrzeug vorwärts fährt.

Wenn dies der Fall ist, werden im Block 4 die Fahrdaten in einen temporären Speicher für einen aktuellen, vorbestimmten Streckenabschnitt x gespeichert. Diese abgespeicherten Fahrdaten können, wie angegeben, Lenkwinkeldaten und/oder Daten einer Umfeldsensorik und/oder Satellitennavigationsdaten und/oder die Geschwindigkeit sein, welche gegebenenfalls bereits verknüpft abgespeichert werden. Die Speicherung erfolgt dabei dergestalt, dass jeweils neu hinzukommende Fahrdaten gespeichert und frühere Fahrdaten, die nicht mehr den vorgegebenen Streckenabschnitt abbilden, kontinuierlich gelöscht werden. Diese temporäre Speicherung erfolgt solange das Fahrzeug vorwärts fährt. Wird das Fahrzeug gestoppt wird auch die Speicherung angehalten.

Wird dagegen an der Verzweigungsstelle 5 festgestellt, dass das Fahrzeug rückwärts fährt, beispielsweise bei eingelegtem Rückwärtsgang, werden die Fahrdaten für den Streckenabschnitt x ausgelesen, und zwar zusammen mit aktuellen Sensordaten (Block 6). Daraus wird ein Datensatz für eine Bilddarstellung des Rückwegs auf einem Bildschirm erstellt (Block 7). Weiter wird ein Datensatz für einen Lenkvorschlag an den Fahrer oder gegebenenfalls für einen direkten Lenkeingriff für den Rückweg x erstellt (Block 8).

An der nachgeordneten Verzweigungsstelle 9 wird festgestellt, wenn die Rückfahrt beendet ist und das Flussdiagramm bei einer Vorwärtsfahrt neu gestartet wird.

### Bezugszeichenliste

- 1: Flussdiagramm
- 2: Block
- 3: Verzweigungsstelle
- 4: Block
- 5: Verzweigungsstelle
- 6: Block
- 7: Block
- 8: Block
- 9: Verzweigungsstelle

## Patentansprüche

1. Fahrerassistenz-System, insbesondere für ein Nutzfahrzeug, mit wenigstens einem Sensor, mit dem Fahrdaten zum Kurs einer aktuell gefahrenen Wegstrecke ermittelt werden, wobei ermittelte Fahrdaten für den Kurs jeweils eines aktuell vorwärts gefahrenen, vorbestimmten letzten Streckenabschnitts (x) in einem temporären Speicher gespeichert werden (4), und wobei bei einer Aktivierung der Assistenzfunktion und einer Rückwärtsfahrt (5) der Fahrer durch Auswertung der im temporären Speicher gespeicherten Fahrdaten (6) durch optische (7) und/oder akustische und/oder haptische Informationen und/oder durch selbsttätige Lenkeingriffe (8) eine Orientierungshilfe für die Rückfahrt auf dem vorher vorwärts gefahrenen und aufgezeichneten Streckenabschnitt (x) erhält, und wobei als optische Orientierungshilfe dem Fahrer auf einem Bildschirm eine, vorzugsweise schematische, Draufsicht oder ein 3D-Bild der aktuellen Umgebung mit einer darauf projizierten aus dem vorangegangenen, vorwärts gefahrenen und gespeicherten Streckenabschnitt (x) abgeleiteten Rückfahrt-Trajektorie zur Verfügung gestellt wird (7), **dadurch gekennzeichnet, dass** durch geeignete Rechenoperationen die gespeicherten Fahrdaten und die gegebenenfalls erfassten Sensordaten für die Umgebung zu Orientierungshilfen für die Rückverfolgung eines vorher gefahrenen Streckenabschnitts (x) mit einem Gespann aus Zugmaschine mit Anhänger/Auflieger oder einem abknickenden Bus aufbereitet werden.

2. Fahrerassistenz-System nach Anspruch 1, **dadurch gekennzeichnet, dass** während der Fahrt im jeweils letzten Streckenabschnitt (x) aktuelle Stellungssignale eines Lenkwinkelsensors zusammen mit Geschwindigkeitssignalen als Fahrdaten der "gelenkten Spur" im temporären Speicher aufgezeichnet werden (4).

3. Fahrerassistenz-System nach Anspruch 2, **dadurch gekennzeichnet, dass** Umgebungsinformationen, mit Abstandssensoren und/oder mit Kameras erfasst, ausgewertet und gespeichert werden und bei der Orientierungshilfe für den Fahrer für eine Überwachung und gegebenenfalls Korrektur des Rückwegs berücksichtigt werden, insbesondere wenn im Vergleich zwischen den bei der Vorwärtsfahrt gespeicherten Umgebungsdaten und aktuell bei der Rückwärtsfahrt erfasster Umgebungsdaten neue Gegebenheiten, insbesondere ein Hindernis, erkannt werden.

4. Fahrerassistenz-System nach einem der Ansprüche 1 bis 3, **dadurch gekennzeichnet, dass** das Fahrassistenz-System zur Erfassung und Aufzeichnung der Fahrdaten bei einer festgestellten Vorwärtsfahrt aktiviert wird (3), und dass die Bereitstellung der Orientierungshilfe für den Fahrer bei eingelegtem Rückwärtsgang erfolgt (5).

5. Fahrerassistenz-System nach einem der Ansprüche 1 bis 4, **dadurch gekennzeichnet, dass** in der Bilddarstellung gegebenenfalls aktuelle Hindernisse mit angezeigt werden und die Rückfahrt-Trajektorie entsprechend hindernisfrei korrigiert wird.

6. Fahrerassistenz-System nach einem der Ansprüche 1 bis 5, **dadurch gekennzeichnet, dass** der Datenspeicher für die temporäre Speicherung der Fahrdaten für die verwendeten Sensoren entsprechend deren Datenstrommenge und entsprechend der Länge des für die Rückfahr-Orientierungshilfe als relevant vorgegebenen Streckenabschnitts (x) dimensioniert ist.

7. Fahrzeug, insbesondere Nutzfahrzeug, mit einem Fahrerassistenz-System nach einem der vorhergehenden Ansprüche.

## Claims

1. Driver assistance system, in particular for a utility vehicle, having at least one sensor with which driving data relating to the course of a route which is currently being driven on are determined, wherein determined driving data for the course of in each case a predetermined last route section (x), currently being driven on in a forward direction, are stored (4) in a temporary memory, and wherein when the assistance function and reverse drive (5) are activated the driver receives, by evaluation of the driving data (6) stored in the temporary memory, an orientation aid for reversing on the recorded route section (x) which has previously been driven on in a forward direction, by means of optical information (7) and/or acoustic and/or haptic information and/or by means of automatic steering interventions (8), and wherein a, preferably schematic, plan view or a 3D image of the current surroundings with a reversal trajectory which is projected thereon and is derived from the preceding stored route section (x) which was driven along in a forward direction is made available (7) as an optical orientation aid to the driver on a screen, **characterized in that** by means of suitable computing operations the stored driving data and the respectively acquired sensor data for the surroundings are processed to form orientation aids for retracing a route section (x) which has been previously driven along, with a vehicle combination composed of a tractor machine with a trailer/semitrailer or a bendy bus.

2. Driver assistance system according to Claim 1, **characterized in that** during the driving in the respective last route section (x) current position signals of a steering angle sensor are recorded (4) together with speed signals as driving data of the "steered track" in the temporary memory.

3. Driver assistance system according to Claim 2, **characterized in that** surroundings information are acquired with distance sensors and/or with cameras and evaluated and stored and taken into account for monitoring and, if appropriate, correcting the reverse travel in the orientation aid for the driver, in particular if new conditions, in particular an obstacle, are detected in comparison with the surroundings data which were stored during the forward travel and surroundings data which have been currently acquired during the reverse travel.

4. Driver assistance system according to one of Claims 1 to 3, **characterized in that** the driving assistance system is activated (3) in order to detect and record the driving data during detected forward travel, and **in that** the provision of the orientation aid for the driver occurs (5) when the reverse gear is engaged.

5. Driver assistance system according to one of Claims 1 to 4, **characterized in that** current obstacles are, if appropriate, also displayed in the image representation, and the reverse trajectory is correspondingly corrected without an obstacle.

6. Driver assistance system according to one of Claims 1 to 5, **characterized in that** the data memory is dimensioned for the temporary storage of the driving data for the sensors which are used, in accordance with the data stream quantity thereof and in accordance with the length of the route section (x) which was specified as relevant for the reversing orientation aid.

7. Vehicle, in particular utility vehicle, having a driver assistance system according to one of the preceding claims.

## Revendications

1. Système d'assistance au conducteur, en particulier pour un véhicule utilitaire, comprenant au moins un capteur permettant de déterminer des données de conduite concernant un parcours d'un trajet actuellement parcouru, des données de conduite déterminées pour le parcours respectivement d'un dernier tronçon prédéterminé (x) actuellement parcouru en marche avant étant stockées (4) dans une mémoire temporaire, et dans lequel, lorsque la fonction d'assistance est activée et en cas de conduite en marche arrière (5), le conducteur reçoit par une évaluation des données de conduite (6) stockées dans la mémoire temporaire un repère pour le recul sur le tronçon (x) parcouru auparavant en marche avant et enregistré sous la forme d'informations optiques (7) et/ou acoustiques et/ou haptiques et/ou par des interventions de direction automatiques (8), et dans lequel, en tant que repère optique, une vue de dessus, de préférence schématique, ou une image 3D de l'environnement actuel avec une trajectoire de recul projetée sur celle-ci, dérivée du tronçon (x) parcouru auparavant en marche avant et enregistrée, est fournie (7) au conducteur sur un écran, **caractérisé en ce que** les données de conduite stockées et les données de capteur pour l'environnement, détectées le cas échéant, sont préparées par des opérations mathématiques adéquates en repères pour le traçage d'un tronçon (x) parcouru auparavant par un attelage composé d'un véhicule tracteur et d'une remorque/semi-remorque ou d'un bus articulé.

2. Système d'assistance au conducteur selon la revendication 1, **caractérisé en ce que** pendant la conduite sur le dernier tronçon (x) respectivement, des signaux de position actuels d'un capteur d'angle de braquage sont enregistrés (4) dans la mémoire temporaire avec des signaux de vitesse sous la forme de données de conduite de la « piste de braquage ».

3. Système d'assistance au conducteur selon la revendication 2, **caractérisé en ce que** des informations d'environnement, détectées par des capteurs de distance et/ou des caméras, sont évaluées et stockées et prises en compte pour le repère destiné au conducteur pour la surveillance et éventuellement la correction du retour, en particulier si en comparaison entre les données d'environnement stockées lors de la conduite en marche avant et des données d'environnement détectées actuellement lors de la conduite en marche arrière, de nouvelles conditions, en particulier un obstacle, sont reconnues.

4. Système d'assistance au conducteur selon l'une quelconque des revendications 1 à 3, **caractérisé en ce que** le système d'assistance à la conduite est activé (3) pour détecter et enregistrer les données de conduite si une conduite en marche avant est déterminée, et **en ce que** la fourniture du repère destiné au conducteur est effectuée (5) lorsque la marche arrière est enclenchée.

5. Système d'assistance au conducteur selon l'une quelconque des revendications 1 à 4, **caractérisé en ce que** sur la représentation graphique, des obstacles actuels éventuels sont également affichés et la trajectoire de recul est en conséquence corrigée sans les obstacles.

6. Système d'assistance au conducteur selon l'une quelconque des revendications 1 à 5, **caractérisé en ce que** la mémoire de données pour le stockage temporaire des données de conduite pour les capteurs utilisés est dimensionnée en fonction de leur volume de données et en fonction de la longueur du tronçon (x) spécifié comme pertinent pour le repère de recul.

7. Véhicule, en particulier véhicule utilitaire, comprenant un système d'assistance au conducteur selon l'une quelconque des revendications précédentes.
